# EUROPEAN PATENT APPLICATION

(11) **EP 2 525 606 A1**
(43) Date of publication of application: **21.11.2012**
(21) Application number: 11732966.4
(22) Date of filing: 14.01.2011
(51) Int. Cl.: H04W 36/18, H04W 48/02, H04W 76/02, H04W 76/06

(54) **COMMUNICATION CONTROL APPARATUS, COMMUNICATION CONTROL SYSTEM, AND COMMUNICATION CONTROL METHOD**

(30) Priority: 15.01.2010 JP 2010007247
(71) Applicant: NTT DOCOMO, INC., Chiyoda-ku Tokyo 100-6150 (JP)
(72) Inventor: UCHIYAMA Tadashi, Tokyo 100-6150 (JP); OBATA Kazunori, Tokyo 100-6150 (JP); SHIMADA Shizuko, Tokyo 100-6150 (JP); KUROIWA Takahiro, Tokyo 100-6150 (JP)
(74) Representative: Viering, Jentschura & Partner
(86) International application number: PCT/JP2011/050566
(87) International publication number: WO 2011/087096

(57) **Abstract**

The present invention provides a communication control apparatus, a communication control system, and a communication control method that enhance the use efficiency of transmission power of radio waves used for permitting communication connection of a mobile terminal. The communication control apparatus includes a determining module 12 that determines whether a communication path P1 is established between a permitting base station 22 that is permitted to relay communication by the communication connection and a mobile phone unit M, a permission instructing module 14 that sends a permission signal that permits establishment of a communication path P2 with the mobile phone unit M and relaying of the communication to a rejecting base station 31 that is present at a location enabling establishment of the communication path P2 but is not permitted to relay the communication only when the determining module 12 determines that the communication path P1 is established, and a stop instructing module 15 for sending a deletion signal that indicates deletion of the communication path P2 that is established with the mobile phone unit M to the rejecting base station 31 when the determining module 12 determines that the communication path P1 is not established.

## Description

### Technical Field

The present invention relates to a communication control apparatus, a communication control system, and a communication control method that control communication connection by a mobile terminal by way of at least one base station out of a plurality of base stations capable of establishing a communication path with the mobile terminal.

### Background Art

Even while a mobile terminal such as a mobile phone is moving in communication, establishment of a good wireless communication path for the mobile terminal by way of a base station is performed. For example, in the invention disclosed in the following Patent Literature 1, when a relay base-station apparatus is requested for an authentication of communication to establish a wireless communication path to a basic base-station apparatus from a terminal device, the relay base-station apparatus determines whether relaying to the basic base-station apparatus can be performed. When it is determined that a valid wireless communication path for relaying is present, the relay base-station apparatus then establishes the wireless communication path and notifies the terminal device that the authentication of communication is permitted. Meanwhile, when it is determined that not a single valid wireless communication path is present, the relay base-station apparatus notifies the terminal device that the authentication of communication is not allowed. Accordingly, if the establishment of a communication path for which a mobile terminal such as a terminal device requests is possible by determining whether a valid wireless communication path for relaying is present, the communication path is established.

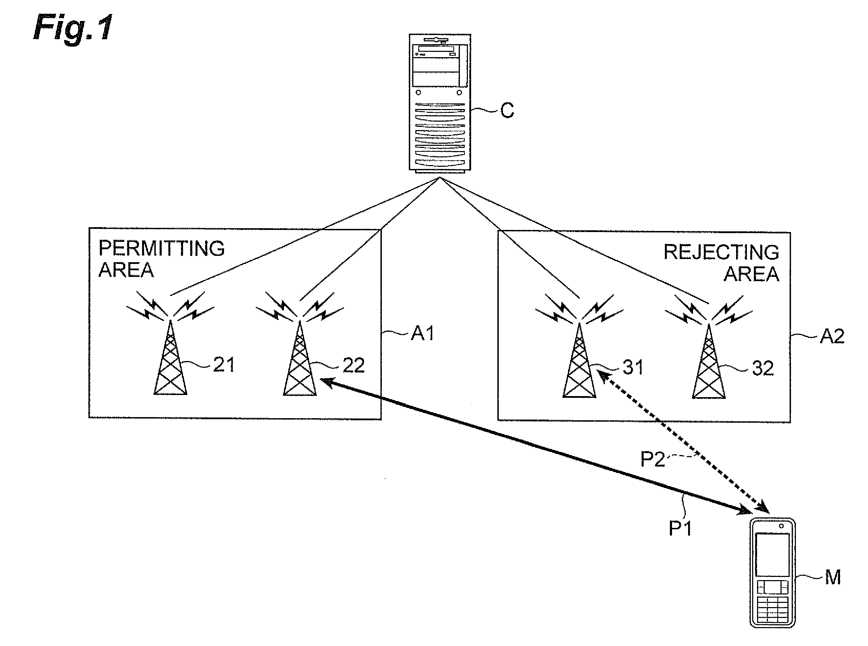

A telecommunication carrier that provides such a mobile communications service using mobile terminals such as terminal devices generally makes roaming contracts with other telecommunication carriers to allow the mobile terminal to make roaming connection for continuation of communication while in motion. For example, in communication areas provided by base stations of a first telecommunication carrier, there may be two kinds of areas: a permitting area provided by a base station that permits roaming connection which allows communication with a second telecommunication carrier and a rejecting area provided by a base station that rejects such roaming connection. The relationship between the communication paths established between a mobile terminal and base stations and the setting of permission or rejection of roaming connection will be explained with reference to FIG. 1. FIG 1 is an explanatory diagram for explaining this relationship.

Although a mobile phone unit M as a mobile terminal tries to perform communication with other mobile terminals and information providing devices, the mobile phone unit M is located outside a communication area (not depicted) where the communication with the second telecommunication carrier is possible. Therefore, the mobile phone unit M performs communication with at least one base station out of base stations for realizing a first communication service provided by the first telecommunication carrier so as to perform communication with the second telecommunication carrier (i.e., roaming connection). In other words, the relevant base station performs relaying of communication by roaming connection. The mobile phone unit M is a terminal for realizing a second communication service provided by the second telecommunication carrier. The management control, such as selection of base station to perform relaying of communication by roaming connection, is performed by a wireless control apparatus C.

In the communication areas provided by base stations of the first telecommunication carrier, there are two kinds of areas: a permitting area A1 provided by base stations 21, 22 that permit roaming connection which allows communication with the second telecommunication carrier, and a rejecting area A2 provided by base stations 31, 32 that reject the roaming connection. The mobile phone unit M is allowed to make roaming connection after a communication path with at least one of the base station 21 or the base station 22 (for example, the base station 21) is established. When a base station the radio-wave reception sensitivity (i.e., wireless communication quality) of which is higher than a given sensitivity (for example, the base station 22) is detected by measurement due to the movement and such of the mobile phone unit M, additional setting and establishment of communication path (a communication path P1, here) (i.e., addition of communication path by handover) are performed based on a report of sensitivity detection results. On the other hand, when a base station the radio-wave reception sensitivity of which is lower than a given sensitivity (for example, the base station 22) is detected due to the movement and such of the mobile phone unit M, disconnection of communication path (the communication path P1, here) (i.e., release of communication path by handover) is performed based on the sensitivity detection results. Such establishment or release of communication path is continuously performed even when the movement is made across base stations.

### Citation List

### Patent Literature

[Patent Literature 1] Japanese Patent Application Laid-Open Publication No. 2007-243752

### Summary of Invention

### Technical Problems

The mobile phone unit M in motion is not able to establish a communication path P2 with the base station 31 and the base station 32 that provide the rejecting area A2. Therefore, as illustrated in FIG. 1, even when the communication path P2 with the base station 31 the radio-wave reception sensitivity of which is higher because it is shorter than the communication path P1 with the base station 22 is detected, the roaming connection using the communication path P2 cannot be performed. Accordingly, as the distance between the mobile phone unit M and the base station 22 becomes long and thus the radio-wave reception sensitivity becomes low, the transmission power of radio waves from the base station 22 becomes excessively large. Consequently, by the radio waves the transmission power of which became excessively large, the interference to other mobile terminals increases.

The sum of transmission power of radio waves from one base station (for example, the base station 22) to all the mobile terminals in communication with the one base station (the base station 22, here) is necessary to be lower than an upper limit of the transmittable power of the one base station (the base station 22, here). Therefore, when a state in which the transmission power of radio waves is excessively large as described above is continued, the transmission power assignable to the other mobile terminals becomes small. As a consequence, the use efficiency of the transmission power of radio waves from the one base station (the base station 22, here) ends up low.

The present invention has been made to solve the above problems and aims to provide a communication control apparatus, a communication control system, and a communication control method that enhance the use efficiency of transmission power of radio waves used for permitting communication connection of a mobile terminal.

### Solution to Problems

To attain the above aim, a communication control apparatus according to the present invention that controls communication connection by a mobile terminal by way of at least one base station out of a plurality of base stations capable of establishing a communication path with the mobile terminal includes determining means for determining whether a first communication path is established between a first base station that is permitted to relay communication by the communication connection and the mobile terminal, first sending means for sending a permission signal that permits establishment of a second communication path with the mobile terminal and relaying of the communication to a second base station that is present at a location enabling establishment of the second communication path but is not permitted to relay the communication only when the determining means determines that the first communication path is established, and second sending means for sending a deletion signal that indicates deletion of the second communication path that is established with the mobile terminal to the second base station when the determining means determines that the first communication path is not established.

In the communication control apparatus according to the present invention, because the first sending means sends a permission signal to the second base station that is present at a location enabling establishment of the second communication path with the mobile terminal but is not permitted to relay the communication only when the determining means determines that the first communication path is established, the communication connection by the mobile terminal by way of the second base station becomes possible. When the determining means determines that the first communication path is not established, the second sending means sends a deletion signal that indicates deletion of the second communication path that is established with the mobile terminal to the second base station.

Consequently, an inconvenience as illustrated in FIG. 1, more specifically, an inconvenience (an event) in which, even when a communication path P2 with a base station 31 (corresponds to the second base station) the radio-wave reception sensitivity of which is higher because it is shorter than a communication path P1 with a base station 22 (corresponds to the first base station) is detected, the communication using the detected communication path P2 cannot be performed can be avoided. In other words, only when it is determined that the communication path P1 with the first base station (i.e., the base station 22) is established, the communication connection by the mobile terminal by way of the second base station (i.e., the base station 31) becomes possible. Accordingly, the problem in which the transmission power of radio waves from the first base station (i.e., the base station 22) becomes excessively large as the distance between the mobile terminal and the first base station (i.e., the base station 22) becomes long and the radio-wave reception sensitivity becomes low can be solved. As a consequence, the interference to other mobile terminals can be suppressed and the use efficiency of transmission power of radio waves used for permitting communication connection of the mobile terminal can be enhanced.

Furthermore, it is preferable that the communication control apparatus further include receiving means for receiving from another communication control apparatus and storing base-station information concerning whether another base station that is controlled by the other communication control apparatus and established a communication path with the mobile terminal is permitted to relay the communication, and the determining means determine whether the first communication path is established between the mobile terminal and at least one base station out of the first base station and a third base station that is permitted to relay the communication and is indicated in the base-station information stored in the receiving means.

Accordingly, the determining means determines whether the first communication path is established between the mobile terminal and at least one base station out of the first base station and the third base station that is controlled by the other communication control apparatus and is indicated in the base-station information. Because the first sending means sends a permission signal to the second base station when the first communication path is established between the mobile terminal and the third base station that is controlled by the other communication control apparatus even if the first communication path is not established between the mobile terminal and the first base station, the communication connection by the mobile terminal by way of the second base station becomes possible. Consequently, even when the first communication path with the first base station is no longer established as a result of the movement of the mobile terminal, if the first communication connection is established with the third base station that is controlled by the other communication control apparatus, the continuation of communication connection becomes possible.

To attain the above aim, a communication control system according to the present invention includes a mobile terminal, a plurality of base stations capable of establishing a communication path with the mobile terminal, and a communication control apparatus that controls communication connection by the mobile terminal by way of at least one base station out of the base stations, in which the base stations include a first base station that is permitted to relay the communication and a second base station that is not permitted to relay the communication, and the communication control apparatus includes determining means for determining whether a first communication path is established between the first base station and the mobile terminal, first sending means for sending a permission signal that permits establishment of a second communication path with the mobile terminal and relaying of the communication to the second base station that is present at a location enabling establishment of the second communication path only when the determining means determines that the first communication path is established, and second sending means for sending a deletion signal that indicates deletion of the second communication path that is established with the mobile terminal to the second base station when the determining means determines that the first communication path is not established.

In the communication control system according to the present invention, because the first sending means sends a permission signal to the second base station that is present at a location enabling establishment of the second communication path with the mobile terminal but is not permitted to relay the communication only when the determining means of the communication control apparatus determines that the first communication path is established, the communication connection by the mobile terminal by way of the second base station becomes possible. When the determining means of the communication control apparatus determines that the first communication path is not established, the second sending means sends a deletion signal that indicates deletion of the second communication path that is established with the mobile terminal to the second base station.

Consequently, as illustrated in FIG 1, an inconvenience in which, even when the communication path P2 with the base station 31 (corresponds to the second base station) the radio-wave reception sensitivity of which is higher because it is shorter than the communication path P1 with the base station 22 (corresponds to the first base station) is detected, the communication using the detected communication path P2 cannot be performed can be avoided. In other words, only when it is determined that the communication path P1 with the first base station (i.e., the base station 22) is established, the communication connection by the mobile terminal by way of the second base station (i.e., the base station 31) becomes possible. Accordingly, the problem in which the transmission power of radio waves from the first base station (i.e., the base station 22) becomes excessively large as the distance between the mobile terminal and the first base station (i.e., the base station 22) becomes long and the radio-wave reception sensitivity becomes low can be solved. As a consequence, the interference to other mobile terminals can be suppressed and the use efficiency of transmission power of radio waves used for permitting communication connection of the mobile terminal can be enhanced.

Furthermore, it is preferable that the communication control apparatus further include receiving means for receiving from another communication control apparatus and storing base-station information concerning whether another base station that is controlled by the other communication control apparatus and established a communication path with the mobile terminal is permitted to relay the communication, and the determining means determines whether the first communication path is established between the mobile terminal and at least one base station out of the first base station and a third base station that is permitted to relay the communication and is indicated in the base-station information stored in the receiving means.

Accordingly, the determining means of the communication control apparatus determines whether the first communication path is established between the mobile terminal and at least one base station out of the first base station and the third base station that is controlled by the other communication control apparatus and is indicated in the base-station information. Because the first sending means sends a permission signal to the second base station when the first communication path is established between the mobile terminal and the third base station that is controlled by the other communication control apparatus even if the first communication path is not established between the mobile terminal and the first base station, the communication connection by the mobile terminal by way of the second base station becomes possible. Consequently, even when the first communication path with the first base station is no longer established as a result of the movement of the mobile terminal, if the first communication path is established with the third base station that is controlled by the other communication control apparatus, the continuation of communication connection becomes possible.

To attain the above aim, a communication control method according to the present invention is performed in a communication control apparatus that controls communication connection by a mobile terminal by way of at least one base station out of a plurality of base stations capable of establishing a communication path with the mobile terminal, and the communication control method includes a determining step of determining whether a first communication path is established between a first base station that is permitted to relay communication by the communication connection and the mobile terminal, a first sending step of sending a permission signal that permits establishment of a second communication path with the mobile terminal and relaying of the communication to a second base station that is present at a location enabling establishment of the second communication path but is not permitted to relay the communication only when it is determined at the determining step that the first communication path is established, and a second sending step of sending a deletion signal that indicates deletion of the second communication path that is established with the mobile terminal to the second base station when it is determined at the determining step that the first communication path is not established.

In the communication control method according to the present invention, because a permission signal is sent to the second base station that is present at a location enabling establishment of the second communication path with the mobile terminal but is not permitted to relay the communication at the first sending step only when it is determined that the first communication path is established at the determining step, the communication connection by the mobile terminal by way of the second base station becomes possible. When it is determined that the first communication path is not established at the determining step, a deletion signal that indicates deletion of the second communication path that is established with the mobile terminal is sent to the second base station at the second sending step.

Consequently, as illustrated in FIG. 1, an inconvenience in which, even when the communication path P2 with the base station 31 (corresponds to the second base station) the radio-wave reception sensitivity of which is higher because it is shorter than the communication path P1 with the base station 22 (corresponds to the first base station) is detected, the communication using the detected communication path P2 cannot be performed can be avoided. In other words, only when it is determined that the communication path P1 with the first base station (i.e., the base station 22) is established, the communication connection by the mobile terminal by way of the second base station (i.e., the base station 31) becomes possible. Accordingly, the problem in which the transmission power of radio waves from the first base station (i.e., the base station 22) becomes excessively large as the distance between the mobile terminal and the first base station (i.e., the base station 22) becomes long and the radio-wave reception sensitivity becomes low can be solved. As a consequence, the interference to other mobile terminals can be suppressed and the use efficiency of transmission power of radio waves used for permitting communication connection of the mobile terminal can be enhanced.

Furthermore, it is preferable that the communication control method further include a receiving step of receiving from another communication control apparatus and storing base-station information concerning whether another base station that is controlled by the other communication control apparatus and established a communication path with the mobile terminal is permitted to relay the communication, and whether the first communication path is established between the mobile terminal and at least one base station out of the first base station and a third base station that is permitted to relay the communication and is indicated in the base-station information stored at the receiving step be determined at the determining step.

Accordingly, at the determining step, determined is whether the first communication path is established between the mobile terminal and at least one base station out of the first base station and the third base station that is controlled by the other communication control apparatus and is indicated in the base-station information. Because a permission signal is sent to the second base station at the first sending step when the first communication path is established between the mobile terminal and the third base station that is controlled by the other communication control apparatus even if the first communication path is not established between the mobile terminal and the first base station, the communication connection by the mobile terminal by way of the second base station becomes possible. Consequently, even when the first communication path with the first base station is no longer established as a result of the movement of the mobile terminal, if the first communication connection is established with the third base station that is controlled by the other communication control apparatus, the continuation of communication connection becomes possible.

### Advantageous Effects of Invention

In accordance with the present invention, a communication control apparatus, a communication control system, and a communication control method that enhance the use efficiency of transmission power of radio waves used for permitting communication connection of a mobile terminal can be provided.

### Brief Description of Drawings

FIG. 1 is an explanatory diagram for explaining the relationship between communication paths established between base stations and a mobile terminal and implementation of permission or rejection of roaming connection.
FIG. 2 is an explanatory diagram for explaining a configuration and processes of a communication control system.
FIG. 3 is an explanatory diagram for explaining the configuration and the processes of the communication control system.
FIG. 4 is a block diagram illustrating a functional configuration of a wireless control apparatus.
FIG. 5 is a block diagram illustrating a hardware configuration of the wireless control apparatus.
FIG 6 is a sequence diagram for explaining processes to perform addition and deletion of communication paths.
FIG 7 is a sequence diagram for explaining processes to perform addition and deletion of communication paths.
FIG. 8 is a sequence diagram for explaining processes to perform addition of communication paths.
FIG. 9 is an explanatory diagram for explaining a configuration of a communication control system.
FIG. 10 is an explanatory diagram for explaining a configuration of a communication control system.
FIGS. 11(a) to 11(c) are explanatory diagrams for explaining content of base-station information.
FIG 12 is a flowchart for explaining processing flow in the wireless control apparatus.

### Description of Embodiment

With reference to the accompanying drawings, a preferred embodiment of the present invention will be explained hereinafter. In the explanation of drawings, the same reference signs are given to the same elements and redundant explanation is omitted.

### (1) Configuration of Communication Control System

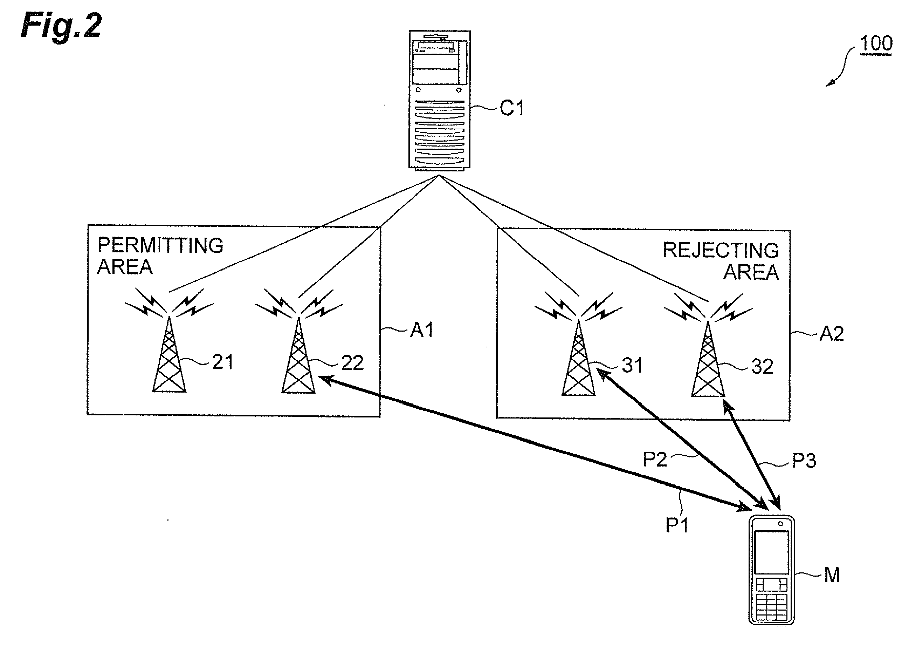

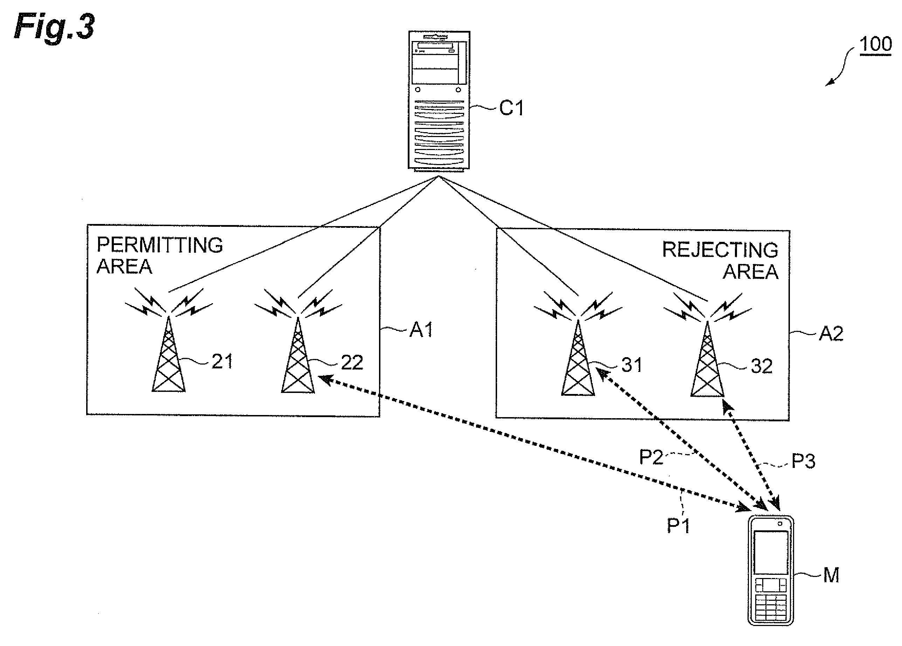

A communication control system of the present embodiment will be explained first with reference to FIGS. 2 and 3. FIGS. 2 and 3 are explanatory diagrams for explaining a configuration and processes of the communication control system that controls communication connection by a mobile terminal.

A communication control system 100 includes a plurality of base stations (base stations 21, 22, 31, 32, here) to realize a first communication service that a first telecommunication carrier provides, a wireless control apparatus C1 (a communication control apparatus) to control the realization of the first communication service, and a mobile phone unit M (a mobile terminal) to realize a second communication service that a second telecommunication carrier provides. Wireless communication is performed between the mobile phone unit M and each of the base stations 21, 22, 31, 32, and a communication connection device (not depicted) is present between each of the base stations 21, 22, 31, 32 and the wireless control apparatus C1.

The mobile phone unit M is a mobile terminal capable of performing communication by roaming connection (i.e., one type of communication connection) by way of at least one base station out of the base stations 21, 22, 31, 32. The mobile phone unit M is capable of establishing a communication path with each of the base stations (i.e., diversity handover) in a network adopting universal mobile telecommunications system (UMTS) specification, and performs communication using the established communication path. Because the mobile phone unit M is located outside a communication area where the above-described second communication service is feasible, to perform communication with other mobile phone units, information providing devices (for example, a server constituting a website), and others, it is necessary to perform the above-described communication with the second telecommunication carrier by way of at least one of the base stations, more specifically, roaming connection.

When the mobile phone unit M detects a base station the radio-wave reception sensitivity (i.e., wireless communication quality) of which is higher than a given sensitivity, the mobile phone unit M sends a request signal that indicates and requests addition of communication path with the base station to the wireless control apparatus C1. Meanwhile, when the mobile phone unit M detects that the radio-wave reception sensitivity from a base station in which a communication path is already established is lower than a given sensitivity, the mobile phone unit M sends a release signal that indicates and requests deletion (i.e., release) of communication path with the base station to the wireless control apparatus C1. The mobile phone unit M is not specifically restricted as long as it is a mobile terminal, and may be a mobile communication terminal with a communication function such as a notebook computer and a PDA.

Each of the base stations 21, 22, 31, 32 is a base-station apparatus capable of establishing a communication path with the mobile phone unit M (for example, a communication path P1 for the base station 22). The base stations 21, 22 (first base stations) are base stations that permit roaming connection in which the communication with the second telecommunication carrier is possible, and provide a permitting area A1 for the mobile phone unit M. On the other hand, the base stations 31, 32 (second base stations) are base stations that reject the roaming connection, and provide a rejecting area A2 for the mobile phone unit M. The permission and rejection of roaming connection are defined by the wireless control apparatus C1 and are changed by an operator who operates the wireless control apparatus C1. While it is explained that two of the base stations 21, 22 correspond to the single permitting area A1 and two of the base stations 31, 32 correspond to the single rejecting area A2 in FIG 2, the number of base stations corresponding to each area is not specifically restricted.

The wireless control apparatus C1 is a control apparatus that controls the roaming connection by the mobile phone unit M by way of at least one base station out of the base stations 21, 22, 31, 32. More specifically, as illustrated in FIG 2, when it is determined that the communication path P1 is established between the mobile phone unit M and at least one of the base stations 21, 22 that provide the permitting area A1 (the base station 22, here), the wireless control apparatus C1 performs the control to permit the establishment of a communication path P2 with the base station 31 in which the communication path cannot be established normally with the mobile phone unit M, and the control to permit the establishment of a communication path P3 with the base station 32 in which the communication path cannot be established normally with the mobile phone unit M. In contrast, as illustrated in FIG. 3, when it is determined that the communication path P1 is not established with the mobile phone unit M and the base stations 21, 22, the wireless control apparatus C1 performs the control to disconnect (i.e., to release) the communication paths P2, P3 to stop the roaming connection.

### (2) Configuration of Wireless Control Apparatus

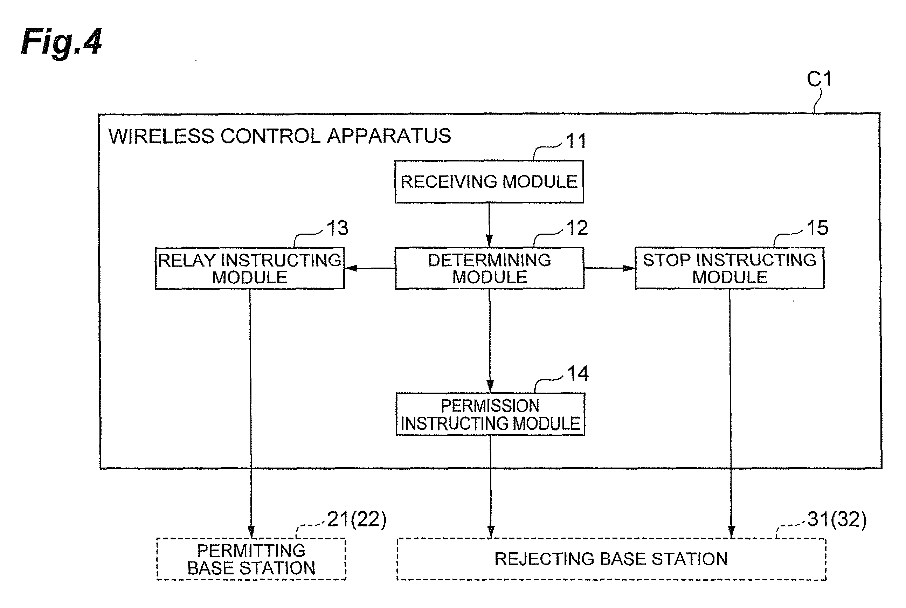

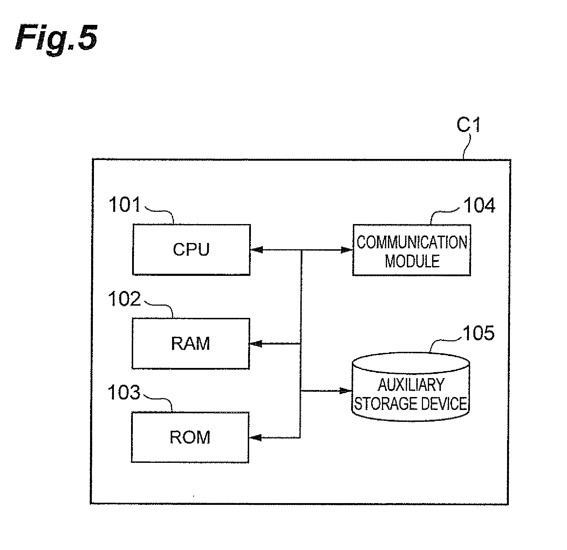

Next, the configuration of the wireless control apparatus C1 of the present embodiment will be explained with reference to FIGS. 4 and 5. FIG 4 is a block diagram illustrating a functional configuration of the wireless control apparatus C1. FIG. 5 is a block diagram illustrating a hardware configuration of the wireless control apparatus C1. As illustrated in FIG. 5, the wireless control apparatus C1 is configured as a computer including hardware such as a central processing unit (CPU) 101, a random access memory (RAM) 102 and a read only memory (ROM) 103 that are main storage devices, a communication module 104 to perform communication with outside, and an auxiliary storage device 105 such as a hard disk. By the operation of these constituent elements, the functions of the wireless control apparatus C1 are exercised.

Furthermore, as illustrated in FIG 4, the wireless control apparatus C1 includes, as functional constituent elements, a receiving module 11 (receiving means), a determining module 12 (determining means), a relay instructing module 13, a permission instructing module 14 (first transmitting means), and a stop instructing module 15 (second transmitting means).

The receiving module 11 is a module that receives various signals such as a request signal and a release signal from the mobile phone unit M. The request signal is a signal to indicate and request addition of communication path not yet established. The release signal is a signal to indicate and request deletion (i.e., release) of communication path already established. The details of sending and receiving of request signals and release signals and processes performed after the sending and receiving will be described later.

The receiving module 11 further receives base-station information from another roaming control apparatuses (i.e., a later described wireless control apparatus C2) and stores the base-station information in the above-described main storage device and the auxiliary storage device. The base-station information is the information indicative of whether another base station that is controlled by the other roaming control apparatus and established a communication path with the mobile phone unit M already is permitted to relay the communication.

The determining module 12 is a module that performs the following determination immediately before a process in accordance with content of a request signal or a release signal received by the receiving module 11 is carried out. More specifically, when the determining module 12 assumed that such process is performed, the determining module 12 determines whether a first communication path is currently established between the mobile phone unit M and at least one of the base stations that permit roaming connection which allows the communication with the second telecommunication carrier. Hereinafter, such a base station is referred to as a permitting base station (for example, it is defined as the permitting base station 21, here). The determining module 12 determines that a first communication path is currently established if there is even one permitting base station present in which the first communication path with the mobile phone unit M is established.

In addition, when the determining module 12 assumed that the above-described process is performed, the determining module 12 may determine whether a first communication path is established between the mobile phone unit M and at least one permitting base station out of the above-described permitting base station (the base station 21, here) and permitting base stations indicated in the base-station information stored in the receiving module 11 (i.e., later described permitting base stations 23 to 25). The detail of such determination performed based on the base-station information will be described later.

The relay instructing module 13 sends, in accordance with the content of a request signal received by the receiving module 11, an instruction signal that indicates additional establishment of communication path to a permitting base station (for example, the permitting base station 22, here). Accordingly, in the mobile phone unit M, the communication paths with the permitting base stations (the permitting base stations 21, 22, here) are established and the communication by roaming connection becomes possible.

The permission instructing module 14 sends a permission signal that permits the establishment of the second communication path (the communication path P2, here) and the relaying of communication to a rejecting base station (for example, the base station 32) only when the determining module 12 determines that the first communication path (the communication path P1, here) is established. The permission signal is sent to a rejecting base station (for example, the base station 32) with which the addition of communication path is requested by a request signal from the mobile phone unit M as the rejecting base station is present at a location enabling establishment of the communication path P2 with the mobile phone unit M. Accordingly, in the mobile phone unit M, only while the above-described communication path (the communication path P1, here) is established, the second communication path (the communication path P2, here) with the rejecting base station that received the permission signal (the rejecting base station 32, here) is established and the communication by roaming connection becomes possible.

The stop instructing module 15 is a module that sends, when the determining module 12 determines that the first communication path (the communication path P I, here) is not established, a deletion signal that indicates deletion of the second communication path established with the mobile phone unit M to all the rejecting base stations (the rejecting base station 32, here) in which a permission signal is received and a communication path (the communication path P2, here) is already established. Consequently, in the mobile phone unit M, the communication path (the communication path P2, here) established with the rejecting base station is released and the communication by roaming connection becomes impossible.

### (3) Processing Flow in Communication Control System

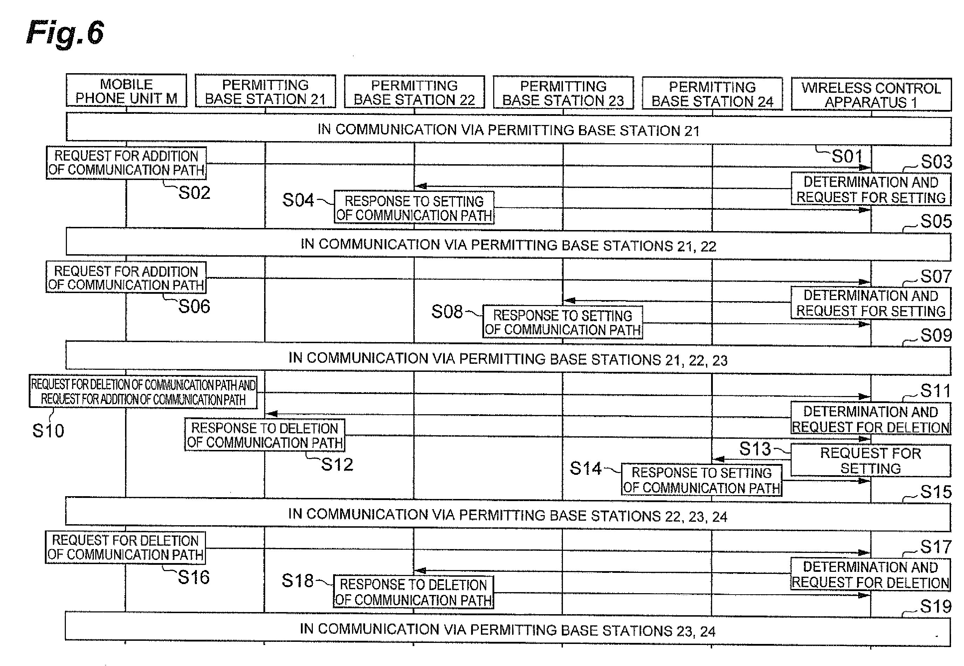

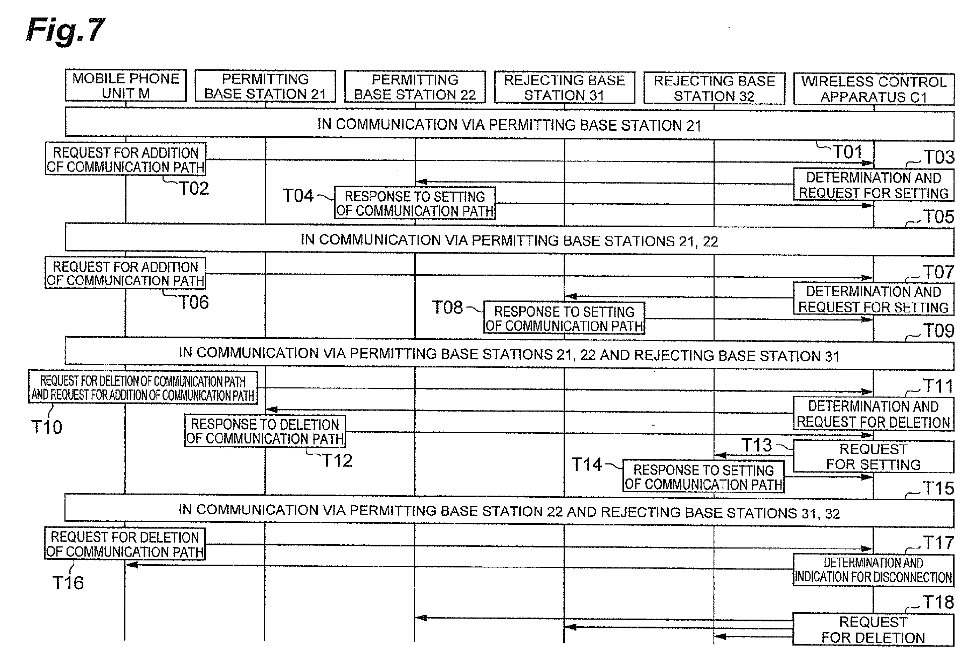

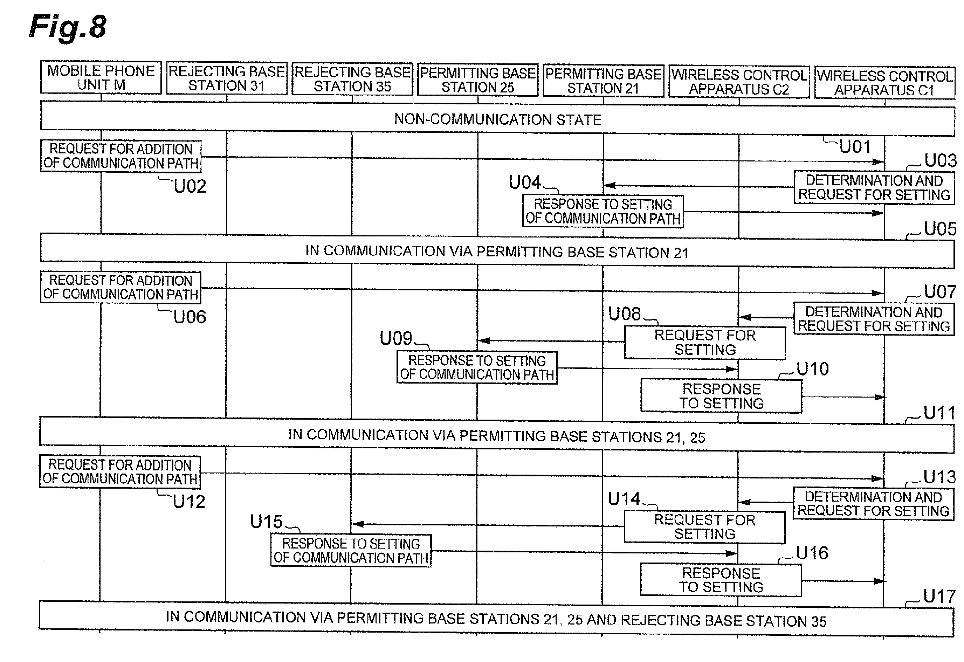

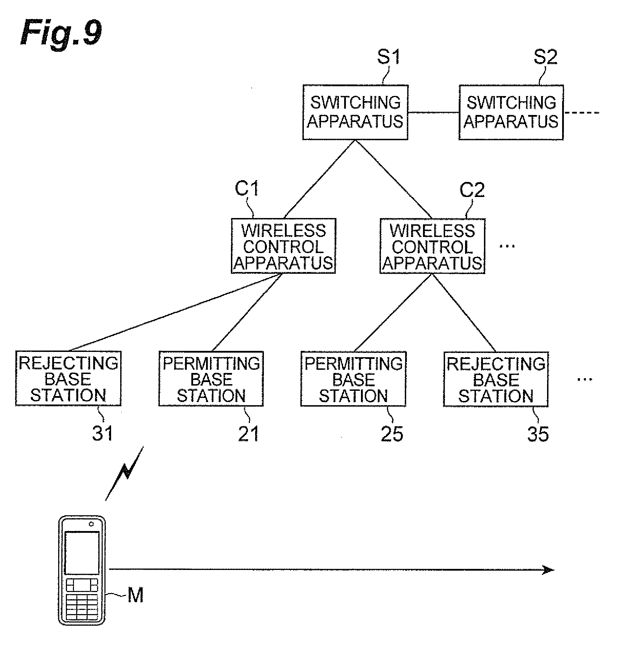

Next, the processing flow in the communication control system will be explained with reference to FIGS. 6 to 9. FIG. 6 is a sequence diagram for explaining an example of processes to perform addition and deletion of communication paths between the mobile phone unit M and the permitting base stations 21 to 24. FIG 7 is a sequence diagram for explaining an example of processes to perform addition and deletion of communication paths between the mobile phone unit M and the permitting base stations 21, 22 and between the mobile phone unit M and the rejecting base stations 31, 32. FIG 8 is a sequence diagram for explaining an example of processes to perform addition of communication paths between the mobile phone unit M and the permitting base stations 21, 22 and between the mobile phone unit M and the rejecting base stations 31, 32 when base-station information is sent and received between the wireless control apparatus C1 and the wireless control apparatus C2. FIG 9 is an explanatory diagram for explaining a configuration of a communication control system when the base-station information is sent and received between the wireless control apparatus C1 and the wireless control apparatus C2.

As illustrated in FIG 6, the processes to perform addition and deletion of communication paths between the mobile phone unit M and the base stations 21 to 24 will be explained first. All of the permitting base stations 21 to 24 are controlled by the wireless control apparatus C1. The permitting base station 21, 22 may be controlled by the wireless control apparatus C1 and the permitting base station 23, 24 may be controlled by another wireless control apparatus (not depicted) different from the wireless control apparatus C1. In this case, the communication by way of a later described switching apparatus S1 is possible between the wireless control apparatus C1 and the wireless control apparatus C2, and the above-described base-station information is sent and received by that. In the base-station information, a carrier code that uniquely identifies a telecommunication carrier may be included. The detail of sending and receiving base-station information will be described later.

At the beginning, while the mobile phone unit M is in a state where a communication path with the permitting base station 21 is established and communication by roaming connection by way of the permitting base station 21 is performed (Step S01), when the mobile phone unit M detects the permitting base station 22 the radio-wave reception sensitivity of which is higher than a given sensitivity, the mobile phone unit M sends a request signal that requests additional establishment of communication path with the permitting base station 22 to the wireless control apparatus C1 (Step S02). In the wireless control apparatus C1 that received the request signal, when the determining module 12 assumed that the process of establishing an additional communication path with the permitting base station 22 is performed, the determining module 12 determines that the first communication path P1 is established between the mobile phone unit M and at least one permitting base station out of the permitting base stations 21, 22 (Step S03, determining step). The relay instructing module 13 then sends an instruction signal that indicates setting of the addition of communication path with the mobile phone unit M and relaying of the communication to the permitting base station 22 (Step S03). The permitting base station 22 that received the instruction signal performs the process of setting the addition of communication path with the mobile phone unit M and replies by sending a transmission signal that transmits the completion of process to the wireless control apparatus C1 (Step S04). As a consequence, a state where the communication is performed by roaming connection by way of each of the permitting base stations 21, 22 is attained (Step S05).

From this state, when the mobile phone unit M detects the permitting base station 23 the radio-wave reception sensitivity of which is higher than a given sensitivity, the mobile phone unit M then sends a request signal that requests additional establishment of communication path with the permitting base station 23 to the wireless control apparatus C1 (Step S06). In the wireless control apparatus C1 that received the request signal, when the determining module 12 assumed that the process of establishing an additional communication path with the permitting base station 23 is performed, the determining module 12 determines that the first communication path P1 is established between the mobile phone unit M and at least one permitting base station out of the permitting base stations 21, 22, 23 (Step S07, determining step). The relay instructing module 13 then sends an instruction signal that indicates setting of the addition of communication path with the mobile phone unit M and relaying of the communication to the permitting base station 23 (Step S07). The permitting base station 23 that received the instruction signal performs the process of setting the addition of communication path with the mobile phone unit M and replies by sending a transmission signal that transmits the completion of process to the wireless control apparatus C1 (Step S08). As a consequence, a state where the communication is performed by roaming connection by way of each of the permitting base stations 21, 22, 23 is attained (Step S09).

From this state, when the mobile phone unit M detects the permitting base station 24 the radio-wave reception sensitivity of which is higher than a given sensitivity and the permitting base station 21 the radio-wave reception sensitivity of which is lower than a given sensitivity, the mobile phone unit M then sends a request signal that requests additional establishment of communication path with the permitting base station 24 and a release signal that requests deletion (i.e., release) of communication path with the permitting base station 21 to the wireless control apparatus C1 (Step S10). In the wireless control apparatus C1 that received the request signal and the release signal, when the determining module 12 assumed that the process of deleting the communication path with the permitting base station 21 and the process of establishing an additional communication path with the permitting base station 24 are performed, the determining module 12 determines that the first communication path P1 is established between the mobile phone unit M and at least one permitting base station out of the permitting base stations 22, 23, 24 (Step S 11, determining step).

The relay instructing module 13 then sends an instruction signal that indicates setting of the deletion of communication path with the mobile phone unit M to the permitting base station 21 (Step S11). The permitting base station 21 that received the instruction signal performs the process of setting the deletion of communication path with the mobile phone unit M and replies by sending a transmission signal that transmits the completion of process to the wireless control apparatus C1 (Step S12). The relay instructing module 13 further sends an instruction signal that indicates setting of the addition of communication path with the mobile phone unit M and relaying of the communication to the permitting base station 24 (Step S13). The permitting base station 24 that received the instruction signal performs the process of setting the addition of communication path with the mobile phone unit M and replies by sending a transmission signal that transmits the completion of process to the wireless control apparatus C1 (Step S14). As a consequence, a state where the communication is performed by roaming connection by way of each of the permitting base stations 22, 23, 24 is attained (Step S15).

From this state, when the mobile phone unit M detects the permitting base station 22 the radio-wave reception sensitivity of which is lower than a given sensitivity, the mobile phone unit M then sends a release signal that requests deletion (i.e., release) of communication path with the permitting base station 22 to the wireless control apparatus C1 (Step S16). In the wireless control apparatus C1 that received the release signal, when the determining module 12 assumed that the process of deleting the communication path with the permitting base station 22 is performed, the determining module 12 determines that the first communication path P1 is established between the mobile phone unit M and at least one permitting base station out of the permitting base stations 23, 24 (Step S17, determining step). The relay instructing module 13 then sends an instruction signal that indicates setting of the deletion of communication path with the mobile phone unit M to the permitting base station 22 (Step S17). The permitting base station 22 that received the instruction signal performs the process of setting the deletion of communication path with the mobile phone unit M and replies by sending a transmission signal that transmits the completion of process to the wireless control apparatus C1 (Step S18). As a consequence, a state where the communication is performed by roaming connection by way of each of the permitting base stations 23, 24 is attained (Step S 19).

Next, as illustrated in FIG. 7, the process of performing addition and deletion of communication paths between the mobile phone unit M and the permitting base stations 21, 22 and between the mobile phone unit M and the rejecting base stations 31, 32 will be explained.

At the beginning, while the mobile phone unit M is in a state where a communication path with the permitting base station 21 is established and communication by roaming connection by way of the permitting base station 21 is performed (Step T01), when the mobile phone unit M detects the permitting base station 22 the radio-wave reception sensitivity of which is higher than a given sensitivity, the mobile phone unit M sends a request signal that requests additional establishment of communication path with the permitting base station 22 to the wireless control apparatus C1 (Step T02). In the wireless control apparatus C1 that received the request signal, when the determining module 12 assumed that the process of establishing an additional communication path with the permitting base station 22 is performed, the determining module 12 determines that the first communication path P1 is established between the mobile phone unit M and at least one permitting base station out of the permitting base stations 21, 22 (Step T03, determining step). The relay instructing module 13 then sends an instruction signal that indicates setting of the addition of communication path with the mobile phone unit M and relaying of the communication to the permitting base station 22 (Step T03). The permitting base station 22 that received the instruction signal performs the process of setting the addition of communication path with the mobile phone unit M and replies by sending a transmission signal that transmits the completion of process to the wireless control apparatus C1 (Step T04). As a consequence, a state where the communication is performed by roaming connection by way of each of the permitting base stations 21, 22 is attained (Step T05).

From this state, when the mobile phone unit M detects the rejecting base station 31 the radio-wave reception sensitivity of which is higher than a given sensitivity, the mobile phone unit M then sends a request signal that requests addition establishment of communication path with the rejecting base station 31 to the wireless control apparatus C1 (Step T06). In the wireless control apparatus C1 that received the request signal, when the determining module 12 assumed that the process of establishing an additional communication path with the rejecting base station 31 is performed, the determining module 12 determines that a communication path is established between the mobile phone unit M and at least one permitting base station out of the permitting base stations 21, 22 (Step T07, determining step). The permission instructing module 14 then sends a permission signal that permits setting of the addition of communication path with the mobile phone unit M and relaying of the communication to the rejecting base station 31 (Step T07, first sending step). The rejecting base station 31 that received the permission signal performs the process of setting the addition of communication path with the mobile phone unit M and replies by sending a transmission signal that transmits the completion of process to the wireless control apparatus C1 (Step T08). As a consequence, a state where the communication is performed by roaming connection by way of each of the permitting base stations 21, 22 and the rejecting base station 31 is attained (Step T09).

From this state, when the mobile phone unit M detects the rejecting base station 32 the radio-wave reception sensitivity of which is higher than a given sensitivity and the permitting base station 21 the radio-wave reception sensitivity of which is lower than a given sensitivity, the mobile phone unit M then sends a request signal that requests additional establishment of communication path with the rejecting base station 32 and a release signal that requests deletion (i.e., release) of communication path with the permitting base station 21 to the wireless control apparatus C1 (Step T10). In the wireless control apparatus C1 that received the request signal and the release signal, when the determining module 12 assumed that the process of deleting the communication path with the permitting base station 21 and the process of establishing an additional communication path with the rejecting base station 32 are performed, the determining module 12 determines that a communication path is established between the mobile phone unit M and the permitting base station 22 (Step T11, determining step).

The relay instructing module 13 then sends an instruction signal that indicates setting of the deletion of communication path with the mobile phone unit M to the permitting base station 21 (Step T11). The permitting base station 21 that received the instruction signal performs the process of setting the deletion of communication path with the mobile phone unit M and replies by sending a transmission signal that transmits the completion of process to the wireless control apparatus C1 (Step T12). The relay instructing module 13 further sends a permission signal that permits setting of the addition of communication path with the mobile phone unit M and relaying of the communication to the rejecting base station 32 (Step T13, first sending step). The rejecting base station 32 that received the permission signal performs the process of setting the addition of communication path with the mobile phone unit M and replies by sending a transmission signal that transmits the completion of process to the wireless control apparatus C1 (Step T14). As a consequence, a state where the communication is performed by roaming connection by way of each of the permitting base station 22 and the rejecting base stations 31, 32 is attained (Step T15).

From this condition, when the mobile phone unit M detects the permitting base station 22 the radio-wave reception sensitivity of which is lower than a given sensitivity, the mobile phone unit M then sends a release signal that requests deletion (i.e., release) of communication path with the permitting base station 22 to the wireless control apparatus C1 (Step T16). In the wireless control apparatus C1 that received the release signal, when the determining module 12 assumed that the process of deleting the communication path with the permitting base station 22 is performed, the determining module 12 determines that a permitting base station that established a communication path with the mobile phone unit M is not present (Step T17, determining step). The stop instructing module 15 then replies by sending a transmission signal that transmits disconnection (i.e., release) of communication path to the mobile phone unit M (Step T17). Thereafter, the stop instructing module 15 sends a deletion signal indicating stopping of relaying the communication by setting the deletion of communication path with the mobile phone unit M to each of the permitting base station 22 and the rejecting base stations 31, 32 (Step T18, second sending step). Each of the permitting base station 22 and the rejecting base stations 31, 32 that received the deletion signal performs the process of setting the deletion of communication path with the mobile phone unit M and replies by sending a transmission signal that transmits the completion of process to the wireless control apparatus C1.

Next, as illustrated in FIGS. 8 and 9, the process of performing addition of communication paths between the mobile phone unit M and the permitting base stations 21, 22 and between the mobile phone unit M and the rejecting base stations 31, 32 when base-station information is sent and received between the wireless control apparatus C1 and the wireless control apparatus C2 will be explained.

As illustrated in FIG 9, a switching apparatus S1 is provided between the wireless control apparatus C1 and the wireless control apparatus C2, and by the switching apparatus S1, the communication by way of the switching apparatus S1 can be performed between the wireless control apparatus C1 and the wireless control apparatus C2. The wireless control apparatus C1 manages the permitting base station 21 and the rejecting base station 31, while the wireless control apparatus C2 manages a permitting base station 25 and a rejecting base station 35. The switching apparatus S1 manages the wireless control apparatus C1 and the wireless control apparatus C2 and is connected in communication with a switching apparatus S2 that manages other wireless control apparatuses (not depicted). The mobile phone unit M that is in a non-communication state at first here is assumed to move in a direction indicated by an arrow, and because a communication path with the rejecting base station 31 cannot be established at first, the mobile phone unit M first requests establishment of communication path with the permitting base station 21.

At the beginning, as illustrated in FIG. 8, while the mobile phone unit M is in a non-communication state in which a communication path is not established with any of the base stations (Step U01), when the mobile phone unit M detects the permitting base station 21 the radio-wave reception sensitivity of which is higher than a given sensitivity, the mobile phone unit M sends a request signal that requests additional establishment of communication path with the permitting base station 21 to the wireless control apparatus C1 (Step U02). In the wireless control apparatus C1 that received the request signal, when the determining module 12 assumed that the process of establishing an additional communication path with the permitting base station 21 is performed, the determining module 12 determines that a communication path is established between the mobile phone unit M and the permitting base station 21 (Step U03, determining step). The relay instructing module 13 then sends an instruction signal that indicates setting of the addition of communication path with the mobile phone unit M and relaying of communication to the permitting base station 21 (Step U03). The permitting base station 21 that received the instruction signal performs the process of setting the addition of communication path with the mobile phone unit M and replies by sending a transmission signal that transmits the completion of process to the wireless control apparatus C1 (Step U04). As a consequence, a state where the communication is performed by roaming connection by way of the permitting base station 21 is attained (Step U05).

From this state, when the mobile phone unit M detects the permitting base station 25 the radio-wave reception sensitivity of which is higher than a given sensitivity, the mobile phone unit M then sends a request signal that requests additional establishment of communication path with the permitting base station 25 that is managed by the wireless control apparatus C2 to the wireless control apparatus C1 by way of the permitting base station 21 (Step U06). In the wireless control apparatus C1 that received the request signal, when the determining module 12 assumed that the process of establishing an additional communication path with the permitting base station 25 is performed, the determining module 12 determines that a communication path is established between the mobile phone unit M and at least one permitting base station out of the permitting base stations 21, 25 (Step U07, determining step). The relay instructing module 13 then sends an instruction signal that indicates setting of the addition of communication path with the mobile phone unit M and relaying of the communication to the wireless control apparatus C2 (Step U07). The wireless control apparatus C2 that received the instruction signal sends the instruction signal to the permitting base station 25 (Step U08). The permitting base station 25 that received the instruction signal performs the process of setting the addition of communication path with the mobile phone unit M and replies by sending a transmission signal that transmits the completion of process to the wireless control apparatus C2 (Step U09). The wireless control apparatus C2 that received the transmission signal replies by sending the transmission signal and base-station information concerning the permitting base station 25 to the wireless control apparatus C1 (Step U10). The wireless control apparatus C1 receives and stores therein the base-station information (receiving step). As a consequence, a state where the communication is performed by roaming connection by way of each of the permitting base stations 21, 25 is attained (Step U11).

From this state, when the mobile phone unit M detects the rejecting base station 35 the radio-wave reception sensitivity of which is higher than a given sensitivity, the mobile phone unit M then sends a request signal that requests additional establishment of communication path with the rejecting base station 35 that is managed by the wireless control apparatus C2 to the wireless control apparatus C1 by way of the permitting base station 21 (Step U12). In the wireless control apparatus C1 that received the request signal, when the determining module 12 assumed that the process of establishing an additional communication path with the rejecting base station 35 is performed, the determining module 12 determines that a communication path is established between the mobile phone unit M and at least one permitting base station out of the permitting base stations 21, 25 (Step U13, determining step). The relay instructing module 13 then sends a permission signal that permits setting of the addition of communication path with the mobile phone unit M and relaying of the communication to the wireless control apparatus C2 (Step U13, first sending step). The wireless control apparatus C2 that received the permission signal sends the permission signal to the rejecting base station 35 (Step U14, first sending step). The rejecting base station 35 that received the permission signal performs the process of setting the addition of communication path with the mobile phone unit M and replies by sending a transmission signal that transmits the completion of process to the wireless control apparatus C2 (Step U15). The wireless control apparatus C2 that received the transmission signal replies by sending the transmission signal to the wireless control apparatus C1 (Step U16). As a consequence, a state where the communication is performed by roaming connection by way of each of the permitting base stations 21, 25 and the rejecting base station 35 is attained (Step U17).

### (4) Stored Base-Station Information

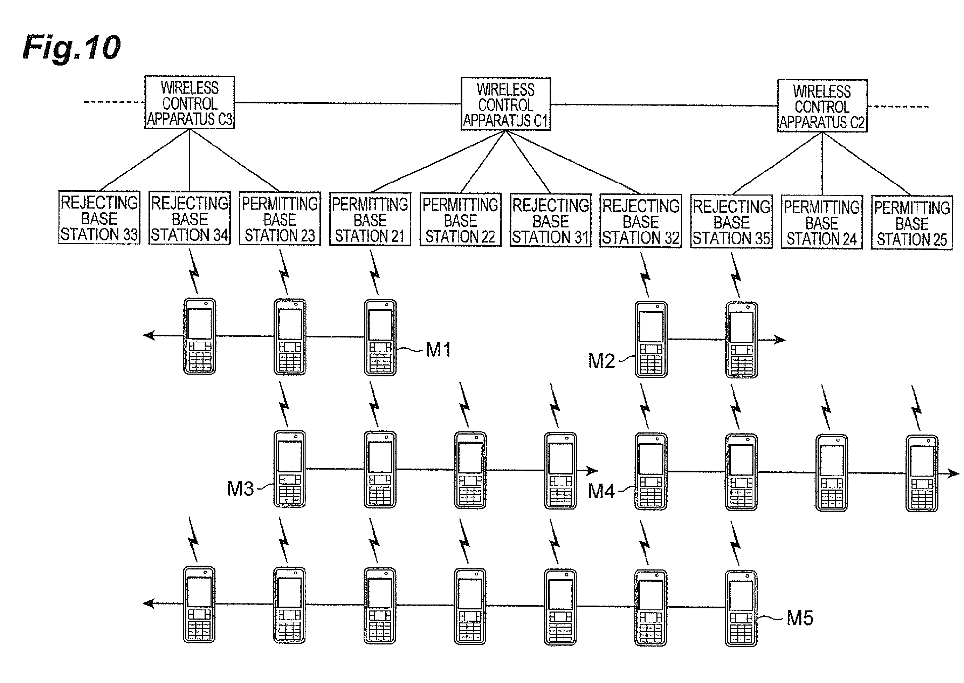

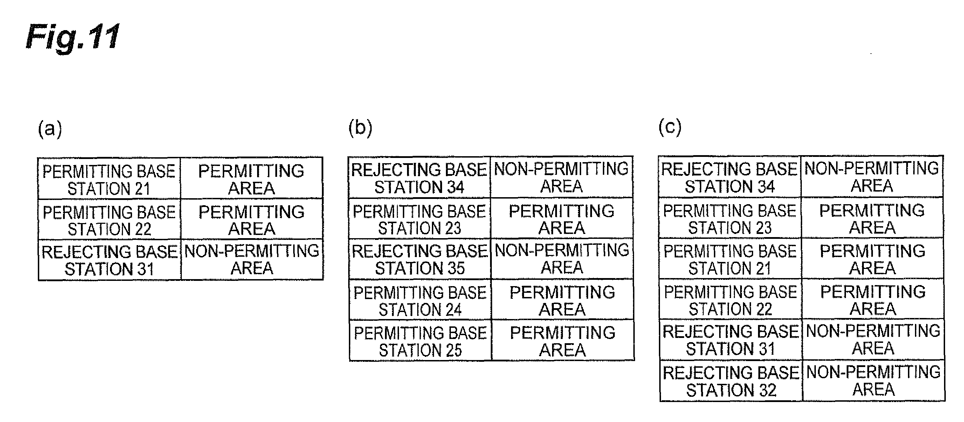

Next, the base-station information stored in each of the wireless control apparatuses will be explained with reference to FIGS. 10 and 11(a) to 11(c). FIG. 10 is an explanatory diagram for explaining a configuration of a communication control system when the base-station information is sent and received among the wireless control apparatuses C1, C2, C3. Each of FIGS. 11(a) to 11(c) is an explanatory diagram for explaining content of the base-station information stored in the respective wireless control apparatuses C1, C2, C3. The base-station information stored is used to determine whether the above-described first communication path (i.e., the communication path P1) is established between the mobile phone unit M and a permitting base station that is controlled by another neighboring wireless control apparatus. If the first communication path is established, the roaming connection by the mobile phone unit M by way of a rejecting base station becomes possible.

As illustrated in FIG. 10, between the wireless control apparatus C1 and the wireless control apparatus C2 and between the wireless control apparatus C1 and wireless control apparatus C3, the communication by way of a switching apparatus (not depicted) is possible. The wireless control apparatus C1 manages the permitting base stations 21, 22 and the rejecting base stations 31, 32, the wireless control apparatus C2 manages the permitting base stations 24, 25 and the rejecting base station 35, and the wireless control apparatus C3 manages the permitting base station 23 and the rejecting base stations 33, 34. Each of mobile phone units M1 to M5 the first communication path of which is constantly established with a permitting base station not depicted is assumed to move in directions indicated by respective arrows.

The movement of the respective mobile phone units M1 to M5, as illustrated in FIG. 10, will be explained first. The mobile phone unit M1 moves, after performing the additional establishment of communication path with the permitting base station 21 first, so as to perform the additional establishment of communication paths with the permitting base station 23 and the rejecting base station 34 in sequence. The mobile phone unit M2 moves, after performing the additional establishment of communication path with the rejecting base station 32 first, so as to perform the addition establishment of communication path with the rejecting base station 35 in sequence. The mobile phone unit M3 moves, after performing the additional establishment of communication path with the permitting base station 23 first, so as to perform the additional establishment of communication paths with the permitting base station 21, the permitting base station 22, and the rejecting base station 31 in sequence.

Likewise, the mobile phone unit M4 moves, after performing the additional establishment of communication path with the rejecting base station 32 first, so as to perform the additional establishment of communication paths with the rejecting base station 35, the permitting base station 24, and the permitting base station 25 in sequence. The mobile phone unit M5 moves, after performing the additional establishment of communication path with the rejecting base station 35 first, so as to perform the additional establishment of communication paths with the rejecting base station 32, the rejecting base station 31, the permitting base station 22, the permitting base station 21, the permitting base station 23, and the rejecting base station 34 in sequence.

As a result of the above-described movement of the respective mobile phone units M1 to M5, the wireless control apparatus C3 stores therein the base-station information the content of which is illustrated in FIG. 11(a) as a table. The wireless control apparatus C1 stores therein the base-station information the content of which is illustrated in FIG. 11(b) as a table. The wireless control apparatus C2 stores therein the base-station information the content of which is illustrated in FIG. 11(c) as a table.

The base-station information stored in the respective wireless control apparatuses C1 to C3 is updated by overwriting and stored when the new base-station information is received. To prevent an erroneous operation by using the base-station information of relatively old content, it may be configured that the base-station information that is not updated by overwriting for a given period of time is erased (i.e., cleared) on a regular basis for each given period of time.

Now, the storage of the base-station information by the result of the respective movement of the mobile phone units M1, M3, M4, and M5 will be explained as an example. When the mobile phone unit M1 moves from an area where the establishment of communication path with the permitting base station 21 that is managed by the wireless control apparatus C1 is performed to an area where the establishment of communication path with the permitting base station 23 that is managed by the wireless control apparatus C3 is possible, the mobile phone unit M1 detects the permitting base station 23 the radio-wave reception sensitivity of which is higher than a given sensitivity and sends a request signal that requests the additional establishment of communication path with the permitting base station 23 to the wireless control apparatus C3. Accordingly, as illustrated in FIG 11(b), the base-station information the content of which is that the permitting base station 23 resides in a "permitting area" is sent from the wireless control apparatus C3 that is a moving destination to the wireless control apparatus C1 that is a moving source and is stored in the wireless control apparatus C1. The base-station information is sent from the wireless control apparatus C3 to the wireless control apparatus C1 and stored each time a communication path is additionally established by the movement of the mobile phone unit M1 when the wireless control apparatus C1 is an anchor (serving) for the mobile phone unit M1.

When the mobile phone unit M1 further moves from the area where the establishment of communication path with the permitting base station 21 that is managed by the wireless control apparatus C1 is performed to an area where the establishment of communication path with the rejecting base station 34 that is managed by the wireless control apparatus C3 is possible through the area where the establishment of communication path with the permitting base station 23 is performed, the mobile phone unit M1 detects the rejecting base station 34 the radio-wave reception sensitivity of which is higher than a given sensitivity and sends a request signal that requests the additional establishment of communication path with the rejecting base station 34 to the wireless control apparatus C3. Consequently, as illustrated in FIG. 11(b), the base-station information the content of which is that the rejecting base station 34 resides in a "non-permitting area" is sent from the wireless control apparatus C3 of the moving destination to the wireless control apparatus C1 of the moving source and is stored in the wireless control apparatus C1.

Similarly, when the mobile phone unit M4 moves from an area where the establishment of communication path with the rejecting base station 32 that is managed by the wireless control apparatus C1 is performed to an area where the establishment of communication path with the rejecting base station 35 that is managed by the wireless control apparatus C2 is possible, the mobile phone unit M4 detects the rejecting base station 35 the radio-wave reception sensitivity of which is higher than a given sensitivity and sends a request signal that requests the additional establishment of communication path with the rejecting base station 35 to the wireless control apparatus C2. Accordingly, as illustrated in FIG 11(b), the base-station information the content of which is that the rejecting base station 35 resides in a "non-permitting area" is sent from the wireless control apparatus C2 that is a moving destination to the wireless control apparatus C1 that is a moving source and is stored in the wireless control apparatus C1. The base-station information is sent from the wireless control apparatus C2 to the wireless control apparatus C1 and stored each time a communication path is additionally established by the movement of the mobile phone unit M4 when the wireless control apparatus C1 is an anchor (serving) for the mobile phone unit M4.

When the mobile phone unit M4 further moves from the area where the establishment of communication path with the rejecting base station 32 that is managed by the wireless control apparatus C1 is performed to an area where the establishment of communication path with the permitting base station 24 that is managed by the wireless control apparatus C2 is possible through the area where the establishment of communication path with the rejecting base station 35 is performed, the mobile phone unit M4 detects the permitting base station 24 the radio-wave reception sensitivity of which is higher than a given sensitivity and sends a request signal that requests the additional establishment of communication path with the permitting base station 24 to the wireless control apparatus C2. Consequently, as illustrated in FIG 11(b), the base-station information the content of which is that the permitting base station 24 resides in a "permitting area" is sent from the wireless control apparatus C2 of the moving destination to the wireless control apparatus C1 of the moving source and is stored in the wireless control apparatus C1.

When the mobile phone unit M4 further moves from the area where the establishment of communication path with the rejecting base station 32 that is managed by the wireless control apparatus C1 is performed to an area where the establishment of communication path with the permitting base station 25 that is managed by the wireless control apparatus C2 is possible through the areas where the establishment of communication path with each of the rejecting base station 35 and the permitting base station 24 is performed in sequence, the mobile phone unit M4 detects the permitting base station 25 the radio-wave reception sensitivity of which is higher than a given sensitivity and sends a request signal that requests the additional establishment of communication path with the permitting base station 25 to the wireless control apparatus C2. Consequently, as illustrated in FIG. 11(b), the base-station information the content of which is that the permitting base station 25 resides in a "permitting area" is sent from the wireless control apparatus C2 of the moving destination to the wireless control apparatus C1 of the moving source and is stored in the wireless control apparatus C1.

Likewise, when the mobile phone unit M3 moves from an area where the establishment of communication path with the permitting base station 23 that is managed by the wireless control apparatus C3 is performed to an area where the establishment of communication path with the permitting base station 21 that is managed by the wireless control apparatus C1 is possible, the mobile phone unit M3 detects the permitting base station 21 the radio-wave reception sensitivity of which is higher than a given sensitivity and sends a request signal that requests the additional establishment of communication path with the permitting base station 21 to the wireless control apparatus C1. Accordingly, as illustrated in FIG. 11(a), the base-station information the content of which is that the permitting base station 21 resides in a "permitting area" is sent from the wireless control apparatus C1 that is a moving destination to the wireless control apparatus C3 that is a moving source and is stored in the wireless control apparatus C3. The base-station information is sent from the wireless control apparatus C1 to the wireless control apparatus C3 and stored each time a communication path is additionally established by the movement of the mobile phone unit M3 when the wireless control apparatus C3 is an anchor (serving) for the mobile phone unit M3.

When the mobile phone unit M3 further moves from the area where the establishment of communication path with the permitting base station 23 that is managed by the wireless control apparatus C3 is performed to an area where the establishment of communication path with the permitting base station 22 that is managed by the wireless control apparatus C1 is possible through the area where the establishment of communication path with the permitting base station 21 is performed, the mobile phone unit M3 detects the permitting base station 22 the radio-wave reception sensitivity of which is higher than a given sensitivity and sends a request signal that requests the additional establishment of communication path with the permitting base station 22 to the wireless control apparatus C1. Consequently, as illustrated in FIG. 11(a), the base-station information the content of which is that the permitting base station 22 resides in a "permitting area" is sent from the wireless control apparatus C1 of the moving destination to the wireless control apparatus C3 of the moving source and is stored in the wireless control apparatus C3.

When the mobile phone unit M3 further moves from the area where the establishment of communication path with the permitting base station 23 that is managed by the wireless control apparatus C3 is performed to an area where the establishment of communication path with the rejecting base station 31 that is managed by the wireless control apparatus C1 is possible through the areas where the establishment of communication paths with the permitting base stations 21, 22 is performed in sequence, the mobile phone unit M3 detects the rejecting base station 31 the radio-wave reception sensitivity of which is higher than a given sensitivity and sends a request signal that requests the additional establishment of communication path with the rejecting base station 31 to the wireless control apparatus C1. Consequently, as illustrated in FIG. 11(a), the base-station information the content of which is that the rejecting base station 31 resides in a "non-permitting area" is sent from the wireless control apparatus C1 of the moving destination to the wireless control apparatus C3 of the moving source and is stored in the wireless control apparatus C3.

Similarly, when the mobile phone unit M5 moves from an area where the establishment of communication path with the rejecting base station 35 that is managed by the wireless control apparatus C2 is performed to an area where the establishment of communication path with the rejecting base station 32 that is managed by the wireless control apparatus C1 is possible, the mobile phone unit M5 detects the rejecting base station 32 the radio-wave reception sensitivity of which is higher than a given sensitivity and sends a request signal that requests the additional establishment of communication path with the rejecting base station 32 to the wireless control apparatus C1. Accordingly, as illustrated in FIG. 11(c), the base-station information the content of which is that the rejecting base station 32 resides in a "non-permitting area" is sent from the wireless control apparatus C1 that is a moving destination to the wireless control apparatus C2 that is a moving source and is stored in the wireless control apparatus C2. The base-station information is sent from the wireless control apparatus C1 (or the later described wireless control apparatus C3) to the wireless control apparatus C2 and stored each time a communication path is additionally established by the movement of the mobile phone unit M5 when the wireless control apparatus C2 is an anchor (serving) for the mobile phone unit M5.

When the mobile phone unit M5 further moves from the area where the establishment of communication path with the rejecting base station 35 that is managed by the wireless control apparatus C2 is performed to an area where the establishment of communication path with the rejecting base station 31 that is managed by the wireless control apparatus C1 is possible through the area where the establishment of communication path with the rejecting base station 32 is performed, the mobile phone unit M5 detects the rejecting base station 31 the radio-wave reception sensitivity of which is higher than a given sensitivity and sends a request signal that requests the additional establishment of communication path with the rejecting base station 31 to the wireless control apparatus C1. Consequently, as illustrated in FIG 11(c), the base-station information the content of which is that the rejecting base station 31 resides in a "non-permitting area" is sent from the wireless control apparatus C1 of the moving destination to the wireless control apparatus C2 of the moving source and is stored in the wireless control apparatus C2.

When the mobile phone unit M5 further moves from the area where the establishment of communication path with the rejecting base station 35 that is managed by the wireless control apparatus C2 is performed to an area where the establishment of communication path with the permitting base station 22 that is managed by the wireless control apparatus C1 is possible through the areas where the establishment of communication paths with the rejecting base stations 32, 31 is performed in sequence, the mobile phone unit M5 detects the permitting base station 22 the radio-wave reception sensitivity of which is higher than a given sensitivity and sends a request signal that requests the additional establishment of communication path with the permitting base station 22 to the wireless control apparatus C1. Consequently, as illustrated in FIG 11(c), the base-station information the content of which is that the permitting base station 22 resides in a "permitting area" is sent from the wireless control apparatus C1 of the moving destination to the wireless control apparatus C2 of the moving source and is stored in the wireless control apparatus C2.

When the mobile phone unit M5 further moves from the area where the establishment of communication path with the rejecting base station 35 that is managed by the wireless control apparatus C2 is performed to an area where the establishment of communication path with the permitting base station 21 that is managed by the wireless control apparatus C1 is possible through the areas where the establishment of communication paths with the rejecting base stations 32, 31 and the permitting base station 22 is performed in sequence, the mobile phone unit M5 detects the permitting base station 21 the radio-wave reception sensitivity of which is higher than a given sensitivity and sends a request signal that requests the additional establishment of communication path with the permitting base station 21 to the wireless control apparatus C1. Consequently, as illustrated in FIG. 11(c), the base-station information the content of which is that the permitting base station 21 resides in a "permitting area" is sent from the wireless control apparatus C1 of the moving destination to the wireless control apparatus C2 of the moving source and is stored in the wireless control apparatus C2.

When the mobile phone unit M5 further moves from the area where the establishment of communication path with the rejecting base station 35 that is managed by the wireless control apparatus C2 is performed to an area where the establishment of communication path with the permitting base station 23 that is managed by the wireless control apparatus C3 is possible through the areas where the establishment of communication paths with the rejecting base stations 32, 31 and the permitting base stations 22, 21 is performed in sequence, the mobile phone unit M5 detects the permitting base station 23 the radio-wave reception sensitivity of which is higher than a given sensitivity and sends a request signal that requests the additional establishment of communication path with the permitting base station 23 to the wireless control apparatus C3. Consequently, as illustrated in FIG. 11(c), the base-station information the content of which is that the permitting base station 23 resides in a "permitting area" is sent from the wireless control apparatus C3 of the moving destination to the wireless control apparatus C2 of the moving source by way of the wireless control apparatus C1 and is stored in the wireless control apparatus C2.

When the mobile phone unit M5 further moves from the area where the establishment of communication path with the rejecting base station 35 that is managed by the wireless control apparatus C2 is performed to an area where the establishment of communication path with the rejecting base station 34 that is managed by the wireless control apparatus C3 is possible through the areas where the establishment of communication paths with the rejecting base stations 32, 31 and the permitting base stations 22, 21, 23 is performed in sequence, the mobile phone unit M5 detects the rejecting base station 34 the radio-wave reception sensitivity of which is higher than a given sensitivity and sends a request signal that requests the additional establishment of communication path with the rejecting base station 34 to the wireless control apparatus C3. Consequently, as illustrated in FIG. 11(c), the base-station information the content of which is that the rejecting base station 34 resides in a "non-permitting area" is sent from the wireless control apparatus C3 of the moving destination to the wireless control apparatus C2 of the moving source by way of the wireless control apparatus C1 and is stored in the wireless control apparatus C2.

### (5) Processing Flow in Wireless Control Apparatus

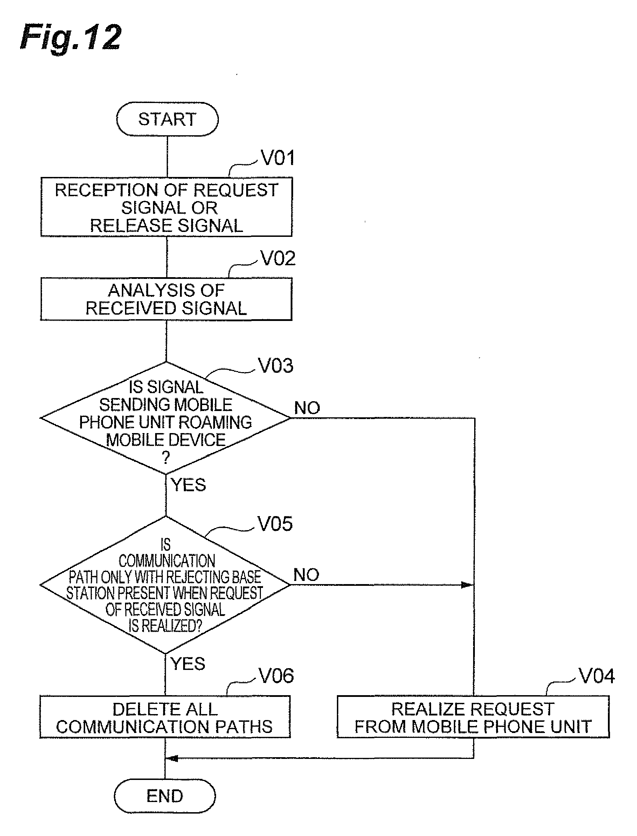

Next, the processing flow in a wireless control apparatus will be explained with reference to FIG. 12. FIG. 12 is a flowchart for explaining the processing flow in the wireless control apparatus.

The receiving module 11 first receives a request signal or a release signal from the mobile phone unit M (Step V01). At this time, the receiving module 11 also receives mobile device information concerning whether the mobile phone unit M that sent the request signal or the release signal is a roaming mobile device that can perform roaming connection from the switching apparatus. The determining module 12 then analyzes the request signal or the release signal and the mobile device information received by the receiving module 11 (Step V02). The determining module 12 here determines whether the mobile phone unit M is a roaming mobile device based on the mobile device information (Step V03).

When the determining module 12 determines that the mobile phone unit M is not a roaming mobile device, the process according to the request of the request signal or the release signal sent from the mobile phone unit M is realized (Step V04, first sending step). On the other hand, when it is determined that the mobile phone unit M is a roaming mobile device, the determining module 12 carries out the following determination. More specifically, when the determining module 12 assumed that the process to realize the request of the request signal or the release signal sent from the mobile phone unit M is performed, the determining module 12 determines whether it is in either of a state where only a communication path between a rejecting base station and the mobile phone unit M is present or a state where a communication path between a permitting base station and the mobile phone unit M is not established (Step V05, determining step).

When it is not in either of the above-described states, more specifically, when it is determined that it is in a state where a communication path is established between a permitting base station and the mobile phone unit M, the process according to the request of the request signal or the release signal sent from the mobile phone unit M is realized (Step V04, first sending step). Meanwhile, when it is determined that it is in either of the above-described states, the stop instructing module 15 sends a deletion signal that indicates stopping of relaying of communication to all rejecting base stations that already received permission signals and are available to relay the communication so as to delete (i.e., release) all communication paths to perform the disconnection of a call (Step V06, second sending step).

### (6) Operation by Wireless Control Apparatus and its Effect

In the roaming control apparatus C1 of the present embodiment, as illustrated in FIG. 2, because the permission instructing module 14 sends a permission signal to the rejecting base station 31 that is present at a location enabling establishment of the second communication path P2 with the mobile phone unit M only when the determining module 12 determines that the first communication path P1 is established, the roaming connection by the mobile phone unit M by way of the rejecting base station 31 becomes possible. When determined by the determining module 12 that the first communication path P1 is not established, the stop instructing module 15 sends a deletion signal to the rejecting base station 31.

Consequently, only when it is determined that the communication path P1 is established, the roaming connection by the mobile phone unit M by way of rejecting base station 31 becomes possible. Accordingly, the problem in that the transmitting power of radio waves from the permitting base station 22 becomes excessively large as the distance between the mobile phone unit M and the permitting base station 22 becomes long and the radio-wave reception sensitivity becomes low can be solved. As a consequence, the use efficiency of transmission power of radio waves used for permitting the roaming connection of the mobile phone unit M can be enhanced.

Now, the specification in which the disconnection of all communication paths is performed when a request signal concerning the establishment of communication path with a rejecting base station (for example, the rejecting base station 31) is received from the mobile phone unit M is conceivable. However, in this specification, an inconvenience occurs in that the roaming connection cannot be made even though the communication path with the permitting base station 22 is established in the mobile phone unit M, and even when the communication path with the permitting base station 22 is subsequently established and the roaming connection becomes possible, the above-described inconvenience reoccurs when the request signal is received again. Consequently, a non-communication state in which the disconnection of all communication paths is performed upon receiving a request signal and a communication state in which a communication path is established upon receiving a request signal are repeated over and over again.

In contrast, in the roaming control apparatus C1 of the present embodiment, when the communication path with the permitting base station 22 is established in the mobile phone unit M, the roaming connection is continuously possible in the mobile phone unit M even when the request signal is received, whereby the occurrence of the above-described inconvenience can be prevented. Furthermore, when the communication path with the permitting base station 22 is disconnected (i.e., released) in the mobile phone unit M, because the mobile phone unit M is located at a distance where a communication path cannot be established except with a rejecting base station only, the occurrence of the above-described inconvenience can be prevented.

Moreover, as illustrated in FIG. 9, even when the first communication path is not established between the mobile phone unit M and the permitting base station 21, the roaming connection by the mobile phone unit M by way of the rejecting base station 31 becomes possible because the permission instructing module 14 sends a permission signal to the rejecting base station 31 if the first communication path is established between the mobile phone unit M and the permitting base station 25 that is controlled by the other wireless control apparatus C2. As a consequence, the problem in that the transmission power of radio waves from the permitting base station 21 becomes excessively large as the distance between the mobile phone unit M and the permitting base station 21 becomes long and the radio-wave reception sensitivity becomes low can be solved.

The present invention is not restricted to the above-described embodiment. For example, the wireless control apparatus C1 may be modified to be configured with a plurality of servers such that the servers operate in cooperation with one another to function as the wireless control apparatus C1. Furthermore, while the wireless control apparatus C1 that received a release signal from the mobile phone unit M performs the above-described determination and deletion processes (i.e., Steps T17, T18) in the above-described embodiment, the wireless control apparatus C1 may be configured to perform the above-described determination and deletion processes when the wireless control apparatus C1 detects that the communication path P1 is not established between the mobile phone unit M and an only remaining permitting base station.

Moreover, the present embodiment may be substituted by defining the second telecommunication carrier to be the same as the first telecommunication carrier, the second communication service to be the same as the first communication service, and the roaming connection of the above-described connection condition to be a normal communication connection. Consequently, although a communication area where the first communication service can be realized is limited for a user of the mobile phone unit M, it becomes possible that the first communication service can be provided by setting call rates charged to the user low and such.

### Industrial Applicability

In accordance with the present invention, the use efficiency of transmission power of radio waves used for permitting the communication connection of a mobile terminal can be enhanced.

### Reference Signs List

11... receiving module, 12... determining module, 13... relay instructing module, 14... permission instructing module, 15... stop instructing module, 21 to 25... permitting base station, 31 to 35... rejecting base station, 100...communication control system, 104... communication module, 105... auxiliary storage device, A1, A2... permitting area, C, C1 to C3... wireless control apparatus, M, M1 to M5... mobile phone unit, P1 to P3... communication path, S1, S2... switching apparatus

## Claims

1. A communication control apparatus controlling communication connection by a mobile terminal by way of at least one base station out of a plurality of base stations capable of establishing a communication path with the mobile terminal, the communication control apparatus comprising:
determining means for determining whether a first communication path is established between a first base station that is permitted to relay communication by the communication connection and the mobile terminal;
first sending means for sending a permission signal that permits establishment of a second communication path with the mobile terminal and relaying of the communication to a second base station that is present at a location enabling establishment of the second communication path but is not permitted to relay the communication only when the determining means determines that the first communication path is established; and
second sending means for sending a deletion signal that indicates deletion of the second communication path that is established with the mobile terminal to the second base station when the determining means determines that the first communication path is not established.

2. The communication control apparatus according to Claim 1, further comprising receiving means for receiving from another communication control apparatus and storing base-station information concerning whether another base station that is controlled by the other communication control apparatus and established a communication path with the mobile terminal is permitted to relay the communication, wherein
the determining means determines whether the first communication path is established between the mobile terminal and at least one base station out of the first base station and a third base station that is permitted to relay the communication and is indicated in the base-station information stored in the receiving means.

3. A communication control system comprising:
a mobile terminal;
a plurality of base stations capable of establishing a communication path with the mobile terminal; and
a communication control apparatus that controls communication connection by the mobile terminal by way of at least one base station out of the base stations, wherein
the base stations include a first base station that is permitted to relay the communication and a second base station that is not permitted to relay the communication, and
the communication control apparatus includes:
determining means for determining whether a first communication path is established between the first base station and the mobile terminal,
first sending means for sending a permission signal that permits establishment of a second communication path with the mobile terminal and relaying of the communication to the second base station that is present at a location enabling establishment of the second communication path only when the determining means determines that the first communication path is established, and
second sending means for sending a deletion signal that indicates deletion of the second communication path that is established with the mobile terminal to the second base station when the determining means determines that the first communication path is not established.

4. The communication control system according to Claim 3, wherein the communication control apparatus further includes:
receiving means for receiving from another communication control apparatus and storing base-station information concerning whether another base station that is controlled by the other communication control apparatus and established a communication path with the mobile terminal is permitted to relay the communication, and
the determining means determines whether the first communication path is established between the mobile terminal and at least one base station out of the first base station and a third base station that is permitted to relay the communication and is indicated in the base-station information stored in the receiving means.

5. A communication control method performed in a communication control apparatus that controls communication connection by a mobile terminal by way of at least one base station out of a plurality of base stations capable of establishing a communication path with the mobile terminal, the communication control method comprising:
a determining step of determining whether a first communication path is established between a first base station that is permitted to relay communication by the communication connection and the mobile terminal,
a first sending step of sending a permission signal that permits establishment of a second communication path with the mobile terminal and relaying of the communication to a second base station that is present at a location enabling establishment of the second communication path but is not permitted to relay the communication only when it is determined at the determining step that the first communication path is established; and
a second sending step of sending a deletion signal that indicates deletion of the second communication path that is established with the mobile terminal to the second base station when it is determined at the determining step that the first communication path is not established.

6. The communication control method according to Claim 5, further comprising a receiving step of receiving from another communication control apparatus and storing base-station information concerning whether another base station that is controlled by the other communication control apparatus and established a communication path with the mobile terminal is permitted to relay the communication, wherein
whether the first communication path is established between the mobile terminal and at least one base station out of the first base station and a third base station that is permitted to relay the communication and is indicated in the base-station information stored at the receiving step is determined at the determining step.
